Europäisches Patentamt

(19) European Patent Office

Office européen des brevets

(11) Veröffentlichungsnummer : **0 029 988**
**B1**

(12) **EUROPÄISCHE PATENTSCHRIFT**

(45) Veröffentlichungstag der Patentschrift :
13.03.85

(21) Anmeldenummer : 80107318.0

(22) Anmeldetag : 24.11.80

(51) Int. Cl.⁴ : **G 06 K 19/08**

(54) Verfahren und Einrichtung zur rechnergesteuerten Erstellung von Dokumenten.

(30) Priorität : 28.11.79 DE 2947939

(43) Veröffentlichungstag der Anmeldung :
10.06.81 Patentblatt 81/23

(45) Bekanntmachung des Hinweises auf die Patenterteilung : 13.03.85 Patentblatt 85/11

(84) Benannte Vertragsstaaten :
AT BE CH FR GB IT LI LU NL SE

(56) Entgegenhaltungen :
GB-A- 2 033 299
LU-A-   81 049
US-A- 3 607 524
US-A- 3 783 755

(73) Patentinhaber : COMPUTER GESELLSCHAFT KON-
STANZ MBH
Max-Stromeyer-Strasse 116
D-7750 Konstanz (DE)

(72) Erfinder : Held, Hans-Joachim, Dr.Ing.
Im Tiergarten 8
D-7751 Konstanz (DE)
Erfinder : Neidhart, Erich
Lindauer Strasse 33
D-7750 Konstanz (DE)

(74) Vertreter : Mehl, Ernst, Dipl.-Ing. et al
Postfach 22 01 76
D-8000 München 22 (DE)

Beschreibung

Die Erfindung bezieht sich auf ein Verfahren und eine Einrichtung zur rechnergesteuerten Erstellung von Dokumenten gemäß den Oberbegriffen der Ansprüche.

Die rechnergesteuerte Erstellung von Dokumenten, beispielsweise von Ausweispapieren, geschieht gemäß einer bekannten Verfahrensweise so, daß alpha-numerische Daten, die auf einem Antragsformular in Hand- oder Maschinenschrift vorliegen, von einer Bedienungsperson mit Hilfe einer Tastatur in den Rechner eingegeben, dort auf Richtigkeit, Plausibilität und Vollständigkeit geprüft und schließlich, durch weitere Angaben ergänzt, als neue Daten auf dem Ausweis ausgedruckt werden. Eine derartige Verfahrensweise ist sehr zeitraubend und erfordert deshalb einen hohen Personalaufwand. Sie ist auch aufgrund der Tatsache, daß die im Antragsformular festgelegten Daten manuell eingetastet werden müssen, zwangsläufig mit einer hohen Fehlerrate, bedingt durch Tippfehler, Verwechslungen, Vertauschungen usw. belastet. Bei der Erstellung von z. B. Ausweispapieren kann es darüber hinaus zu einer Verwechslung bzw. Vertauschung der mit den Antragsformularen abgegebenen Lichtbildern und Unterschriften und damit zu einer fehlerhaften Zuordnung der Lichtbilder und Unterschriften zu den Ausweisdokumenten kommen.

Ähnliche Probleme ergeben sich auch bei der Erstellung von Rechnungen auf der Grundlage von Bestellscheinen, Auftragsbestätigungen, Lieferscheinen oder dergleichen, da auch hier eine manuelle Eintastung der Ursprungsdaten erforderlich ist. Fehlerhafte Angaben auf dem Rechnungsbeleg, z. B. bei der Anschrift, bei der Mengenangabe oder beim Preis, die im Regelfall nie ganz auszuschließen sind, führen dann zu zeitraubenden Reklamationen oder Mahnungen, die die gegenseitigen Geschäftsbeziehungen unnötig belasten.

Aus der US-A-3 607 524 ist ein Verfahren zur Herstellung von Datenkarten bekannt, bei dem ein Gegenstand oder eine Person zusammen mit einer gestanzten Lochkarte fotografiert und das fertige Foto in einer Schutzhülle eingebettet wird. Anschließend werden die gelochten, auf dem Foto als schwarze Markierungen sichtbaren Daten optisch abgetastet und aufgrund der abgetasteten Daten neue Daten auf dem laminierten Datenträger aufgedruckt.

Aus der US-A-3 783 755 ist ferner eine Einrichtung zur Herstellung von Datenträgern bekannt, bei dem einerseits Daten, die auf einer separaten Lochkarte bereitgestellt werden, in Klarschrift auf dem Datenträger ausgedruckt und andererseits persönliche Kenndaten, einschließlich Unterschrift und Fotografie, einer dem Datenträger zuzuordnenden Person durch Fotokopie auf diesen Datenträger übertragen werden.

Der vorliegenden Erfindung liegt nun die Aufgabe zugrunde, ein Verfahren und eine Einrichtung zur rechnergesteuerten Erstellung von Dokumenten in der Weise zu verbessern, daß ausgehend von in maschinenlesbarer Klarschrift bereitgestellten Erstdaten eine verwechslungsfreie Zuordnung von teils maschinenlesbaren, teils anderen Erstdaten und Neudaten, die aus den maschinenlesbaren Erstdaten hergeleitet und auf dem Dokument aufgedruckt werden, gewährleistet ist.

Die Lösung dieser Aufgabe ergibt sich erfindungsgemäß aus den kennzeichnenden Merkmalen der Ansprüche.

Im folgenden wird ein Ausführungsbeispiel der Erfindung anhand der Zeichnung näher erläutert. Sie zeigt in

Figur 1 den prinzipiellen Aufbau einer erfindungsgemäßen Einrichtung zur rechnergesteuerten Erstellung von Dokumenten,

Figur 2 ein Formularblatt zur Verwendung in einer Einrichtung gemäß Fig. 1,

Figur 3 eine für die Verwendung in der Einrichtung gemäß Fig. 1 bestimmte Lese-/Druckvorrichtung in schematischer Darstellung.

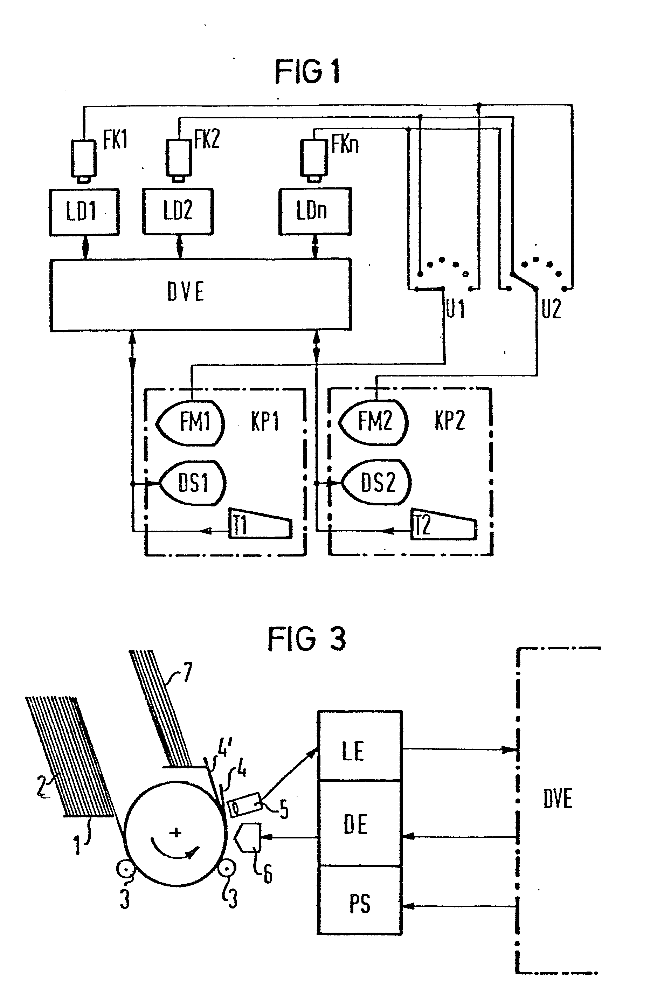

Die Fig. 1 zeigt im einzelnen mehrere Lese-/Druckvorrichtungen LD1 ... LDn, denen eine gemeinsame Datenverarbeitungseinrichtung DVE zugeordnet ist. Die zu verarbeitenden Daten befinden sich auf in der Zeichnung nicht dargestellten Formularblättern, die den Lese-/Druckvorrichtungen LD1 ... LDn zugeführt werden. Die Lese-/Druckvorrichtungen enthalten deshalb eine optische Leseeinrichtung, mittels der die in einem bestimmten Bereich des Formularblattes in maschinenlesbarer Klarschrift bereitgestellten alpha-numerischen Daten gelesen werden. Diese gelesenen Daten werden zunächst in der Datenverarbeitungseinrichtung DVE auf Richtigkeit, Plausibilität und Vollständigkeit geprüft und gegebenenfalls durch zusätzliche Angaben ergänzt. Die daraus gewonnenen neuen Daten werden schließlich in einem weiteren Bereich des inzwischen weitertransportierten Formularblattes mit Hilfe einer Druckvorrichtung ausgedruckt.

Wenn die Überprüfung der gelesenen Information negativ ausfällt, z. B. wenn einzelne Zeichen unleserlich sind oder wenn ein Formular mit nicht maschinenlesbarer Schrift vorliegt, ist eine Unterbrechung des Verfahrens durch eine manuelle Korrektur erforderlich, bevor die auszugebenden Daten gedruckt werden können. In diesem Fall wird der fehlerhaft gelesene Datensatz an einen freien Korrekturplatz KP1 bzw. KP2 übertragen und dort unter Angabe der Nummer der Lese-/Druckvorrichtung LD1 ... LDn, in der das Formular gelesen wurde, in einer dem Aufbau des Formulares entsprechenden Form auf dem Datensichtgerät DS1 bzw. DS2 dargestellt. Die zu korrigierenden Stellen sind dabei besonders gekennzeichnet. Die am Korrekturplatz anwesende Bedienungsperson überprüft nun die gelesenen Daten anhand der Ursprungsdaten auf dem Formularblatt. Zu diesem Zweck ist jeder Lese-/Druckvorrichtung je eine Fernsehkamera FK1 ... FKn zugeordnet, die so auf das eingelegte Formularblatt ausgerichtet ist, daß der maschinell zu lesende Teil des Formularblattes erfaßt wird. Über eine Umschalteinrichtung U1 bzw. U2 wird das Fernsehbild in üblicher Weise an einen Fernsehmonitor FM1 bzw. FM2 übertragen, der im Bereich des Datensichtgerätes DS1 bzw. DS2 des mit der auszuführenden Korrektur belegten Korrekturplatzes KP1 bzw. KP2 angeordnet ist. Anhand des Monitorbildes erfolgt dann eine manuelle Korrektur der relevanten Stellen über die Tastatur T1 bzw. T2 des Korrekturplatzes und anschließend die Rückübertragung des somit korrigierten Datensatzes an die Datenverarbeitungseinrichtung, die nunmehr ihrerseits den Druck der auszugebenden Daten veranlaßt.

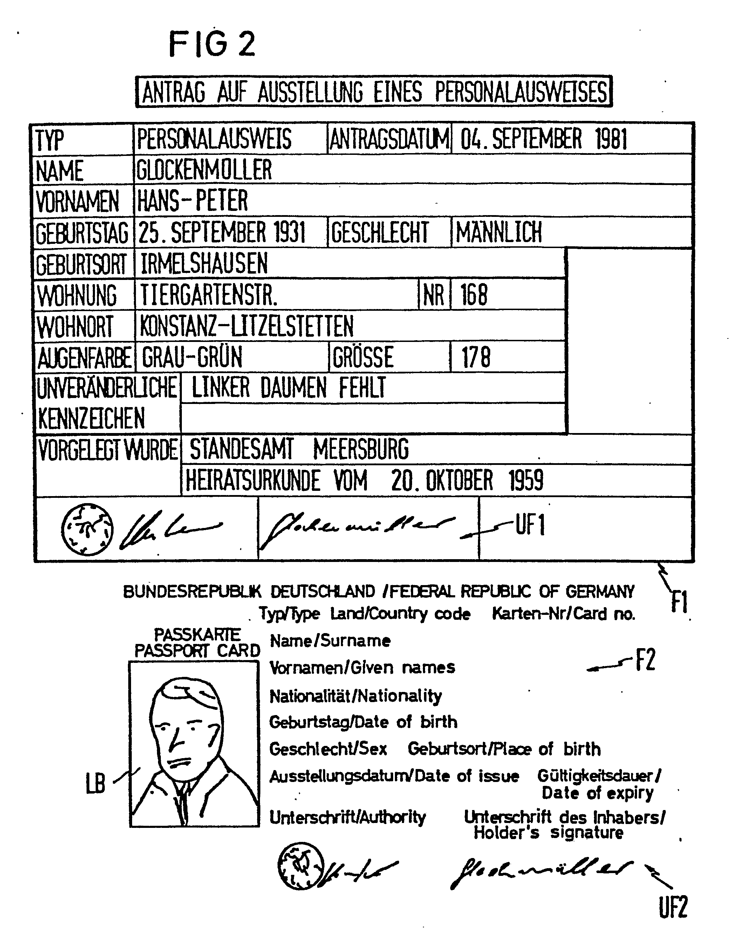

Ein zur Verwendung in einer Einrichtung gemäß Fig. 1 geeignetes Formularblatt ist in Fig. 2 dargestellt. Es besteht aus zwei Feldern F1 und F2, die jeweils etwa die Hälfte des gesamten Formularblattes belegen. Im dargestellten Beispiel dient das obere Feld F1 als Antragsformular für einen Personalausweis, während im unteren Feld F2 die Ausweisvorlage aufgedruckt ist. Die Antragsstellung erfolgt nun in der Weise, daß zunächst im Feld F1 des Formularblattes die jeweils erforderlichen Daten in maschinenlesbarer Klarschrift, z. B. in Schreibmaschinenschrift, eingetragen werden und in Feld F2 im Bereich LB ein Lichtbild des Antragstellers befestigt wird. Der jeweilige Antragsteller bestätigt daraufhin die Richtigkeit der eingetragenen Daten und des Lichtbildes mit Unterschriften im Bereich UF1 des Feldes F1 und UF2 des der Ausweisvorlage zugeordneten Feldes F2. Mit Hilfe eines derart vorbereiteten Antragsformulares und einer Einrichtung gemäß Fig. 1 wird eine automatische Erstellung des Ausweises ermöglicht, wobei aufgrund der Tatsache, daß für Antragsformular und Ausweisvorlage ein gemeinsames Formularblatt verwendet wird und bereits bei der Antragstellung das Lichtbild als auch die Unterschriften aufgebracht werden, eine Verwechslung der personenbezogenen Daten auf dem Ausweis des Antragstellers mit Unterschrift und Lichtbild eines anderen Antragstellers völlig ausgeschlossen wird.

Ein Formularblatt gemäß Fig. 2 läßt sich mit entsprechend geändertem Aufdruck beispielsweise auch im Rechnungswesen verwenden. Hier empfiehlt es sich darüber hinaus, im Bereich des oberen Feldes F1 zusätzlich ein bezüglich des Formularaufdruckes identisches Deckblatt vorzusehen. In dieses Feld F1 werden die den Auftrag betreffenden Daten eingetragen und vom Auftraggeber unterschrieben. Dir Erstellung der Rechnung erfolgt dann analog zum ersten Beispiel (das die Erstellung eines Personalausweises betrifft), in der Weise, daß die Antragsdaten zunächst vom Formularblatt maschinell abgelesen und dann die Rechnungsdaten auf demselben Formularblatt im unteren Feld ausgedruckt werden. Der Auftraggeber kann sich somit anhand (der Kopie) seiner Unterschrift sowie durch Vergleich der Auftragsdaten mit den Rechnungsdaten von der Richtigkeit der Rechnungsstellung überzeugen. Die Unterschrift auf dem Deckblatt gibt andererseits auch dem Auftragnehmer eine gewisse Sicherheit für den Fall, daß der Auftraggeber die Existenz eines von ihm erteilten Auftrages bestreiten sollte.

In Fig. 3 ist der schematische Aufbau für eine Lese-/Druckvorrichtung LD1 ... LDn gemäß Fig. 1 dargestellt. Sie zeigt im einzelnen ein Eingabefach 1, in dem die einzelnen Formulare 2 stapelweise bereitgestellt werden. Mit Hilfe einer nicht dargestellten Vereinzelungseinrichtung werden die Formulare einzeln nacheinander aus dem Stapel abgezogen. Über Transport- bzw. Andruckrollen 3 gelangt ein Formular zunächst in eine Leseposition 4, in der es zeilenweise mit Hilfe eines Lesekopfes 5 abgetastet wird. Die vom Lesekopf 5 und einer Leseelektronik LE gelesenen Daten werden in der Datenverarbeitungseinrichtung DVE entsprechend aufbereitet und gelangen als neue Daten über eine Druckelektronik DE an den Druckkopf 6, der sie auf dem Formular, das inzwischen in die Druckposition 4' weitertransportiert worden ist, in dessen unterem Feld ausdruckt. Lesekopf 5 und Druckkopf 6 sind mechanisch fest gekoppelt, so daß sie nur einen gemeinsamen mechanischen Antrieb zur Positionierung relativ zum Formularblatt und nur eine gemeinsame Positioniersteuerung PS benötigen. Nach Druck der Ausgabedaten folgt die Ablage des Formulars im Ablagefach 7 und die Freigabe für die Bearbeitung des nächsten Formulars.

Bezugszeichenliste

| | |
|---|---|
| LD1 ... LDn | Lese-/Druckvorrichtung |
| DVE | Datenverarbeitungseinrichtung |
| KP1, KP2 | Korrekturplatz |
| FK1 ... FKn | Fernsehkamera |
| U1, U2 | Umschalteinrichtung |
| FM1, FM2 | Fernsehmonitor |
| DS1, DS2 | Datensichtgerät |
| T1, T2 | Tastatur |
| F1, F2 | Formularfeld |
| LB | Formularbereich für Lichtbild |
| UF1, UF2 | Formularfeld für Unterschrift |
| 1 | Eingabefach |
| 2 | Formular |
| 3 | Transport- bzw. Andruckrolle |
| 4 | Formular-Leseposition |
| 4' | Formular-Druckposition |
| 5 | Lesekopf |
| 6 | Druckkopf |
| 7 | Ablagefach |
| LE | Leseelektronik |
| DE | Druckelektronik |
| PS | Positioniersteuerung |

## Ansprüche

1. Verfahren zur rechnergesteuerten Erstellung von Dokumenten aus Erstdaten, unter Verwendung einer Lesevorrichtung, einer Datenverarbeitungseinrichtung, einer Druckvorrichtung sowie eines blatt- oder kartenförmigen, in zwei Felder aufgeteilten Datenträgers der das zu erstellende Dokument umfaßt und, auf dem neben teils maschinenlesbaren, teils anderen Erstdaten weitere, aus den maschinenlesbaren Erstdaten herleitbare Neudaten maschinell aufgezeichnet werden, gekennzeichnet durch folgende Merkmale :

a) es wird ein Datenträger verwendet, der zusätzlich in beiden Feldern je einen Bereich zur Aufnahme von jeweils gleichartigen handschriftlichen Markierungen, Graphikmustern oder Bildern aufweist, auf dem die Erstdaten in maschinenlesbarer Klarschrift im ersten, ausschließlich den Erstdaten zugeordneten Feld eingetragen sind, und dessen zweites Feld als das zu erstellende Dokument vorgesehen ist,

b) die maschinenlesbaren Erstdaten werden in der Lesevorrichtung in Form einer optischen Zeichenerkennungseinrichtung maschinell gelesen,

c) die aus den gelesenen Erstdaten nach deren mittels der Datenverarbeitungseinrichtung erfolgender Prüfung, Aufbereitung und gegebenenfalls Ergänzung gewonnenen Neudaten werden auf dem als Dokument vorgesehenen zweiten Feld des Datenträgers in der Druckvorrichtung in Klarschrift ausgedruckt, wobei Lese- und Druckvorgang in aufeinanderfolgenden Schritten im selben Datenträgerdurchlauf erfolgen, und Lese- und Druckvorrichtung gemeinsam relativ zum Datenträger positioniert werden.

2. Einrichtung zur Durchführung des Verfahrens nach Anspruch 1, dadurch gekennzeichnet, daß je eine Lese- und Druckvorrichtung eine bauliche Einheit bilden, in der sich ein Druckkopf (6), in Transportrichtung des Datenträgers gesehen, vor einem Lesekopf (5) befindet, so daß nach dem Lesen der Erstdaten aus dem ersten Feld der Druck der Neudaten in das zweite Feld im selben Datenträgerdurchlauf erfolgen kann, und daß der Lesekopf und der Druckkopf der Lese-/Druckeinrichtung mechanisch fest gekoppelt sind und gemeinsam relativ zum Datenträger zeilenweise steuerbar sind.

**Claims**

1. A method for the computer controlled preparation of documents from primary data, employing a reading device, a data processing device, a printing device, and a data carrier in the form of a sheet or a card which is divided into two sections, which comprises the document which is to be prepared and on which in addition to in part machine-readable and in part other primary data, further items of new data which can be derived from the machine-readable primary data are machine-recorded, characterised by the following features :

a) a data carrier is used which additionally has in the two sections a zone for the accommodation of similar handwritten marks, graphic patterns or images, where the primary data are entered in machine-readable optical characters in the first section which is assigned exclusively to the primary data, and where the second section is provided as the document which is to be prepared,

b) the machine-readable primary data are machine-read in the reading device in the form of an optical character recognition device,

c) the new data items, which are obtained from the read primary data following their checking, processing and possibly supplementation by means of the data processing device, are printed in optical characters in the printing device on the second section of the data carrier which serves as document, where the reading operation and printing operation are carried out in consecutive steps in the same data carrier run, and reading device and printing device are commonly positioned relative to the data carrier.

2. A device for the execution of the method claimed in claim 1, characterised in that a reading device and a printing device in each case form one structural unit in which a printing head (6) — viewed in the transport direction of the data carrier — is arranged in front of a reading head (5), so that following the read-out of the primary data from the first section, the new data can be printed into the second section in the same data carrier and that the reading heat and the printing head of the reading/printing device are permanently mechanically coupled and can be commonly controlled row-wise relative to the data carrier.

**Revendications**

1. Procédé pour établir, sous le contrôle d'un calculateur, des documents à partir de données initiales, avec mise en œuvre d'un dispositif de lecture, d'un dispositif de traitement de données, d'un dispositif d'impression ainsi que d'un support de données se présentant sous la forme d'une feuille ou d'une carte subdivisée en deux plages et comportant le document à établir, support de données sur lequel sont tracées, en plus de données initiales en partie lisibles par une machine et en partie d'autre données initiales, par une machine, de nouvelles données qui peuvent être déduites à partir des données initiales qui sont susceptibles d'êtres lues par une machine, remarquable par les caractéristiques suivantes :

a) on utilise un support de données qui comporte de plus dans les deux plages respectivement une zone pour recevoir respectivement des marques manuscrites, des modèles de graphiques ou des photos d'un même genre, sur lequel sont portées les données initiales, suivant une écriture en clair susceptible d'être lue par une machine, dans la plage exclusivement associée aux données initiales et dont la seconde plage est prévue en tant que document à établir,

b) les données initiales, susceptibles d'être lues par une machine, sont lues par voie de machine dans un dispositif de lecture de la forme d'un dispositif optique de reconnaissance des signes,

c) les données nouvelles obtenues à partir des données initiales lues, après leur contrôle, leur traitement et éventuellement leur complémentation opérée à l'aide du dispositif de traitement des données, sont reproduites en clair, dans le dispositif d'impression, sur la seconde plage prévue en tant que document, l'opération de lecture et d'impression ayant lieu en deux phases opératoires successives pendant un même passage du support d'enregistrement et les dispositifs de lecture et d'impression étant positionnés en commun par rapport au support de données.

2. Dispositif pour la mise en œuvre du procédé selon la revendication 1, caractérisé par le fait que respectivement une unité de lecture et une unité d'impression forment une unité de construction dans laquelle se trouve une tête d'impression (6) située à l'avant d'une tête de lecture si l'on regarde dans le sens du transport du support de données, en sorte qu'après la lecture des données initiales dans la première plage puisse avoir lieu, pendant le même passage du support de données, l'impression de données nouvelles dans la seconde plage, et que la tête de lecture et la tête d'impression du dispositif de lecture/impression sont accouplées mécaniquement et sont susceptibles d'être commandées en commun et ligne par ligne par rapport au support de données.

# FIG 1

# FIG 3

# FIG 2

## ANTRAG AUF AUSSTELLUNG EINES PERSONALAUSWEISES

| TYP | PERSONALAUSWEIS | ANTRAGSDATUM | 04. SEPTEMBER 1981 | |
|---|---|---|---|---|
| NAME | GLOCKENMÖLLER | | | |
| VORNAMEN | HANS-PETER | | | |
| GEBURTSTAG | 25. SEPTEMBER 1931 | GESCHLECHT | MÄNNLICH | |
| GEBURTSORT | IRMELSHAUSEN | | | |
| WOHNUNG | TIERGARTENSTR. | | NR | 168 |
| WOHNORT | KONSTANZ-LITZELSTETTEN | | | |
| AUGENFARBE | GRAU-GRÜN | GRÖSSE | 178 | |
| UNVERÄNDERLICHE KENNZEICHEN | LINKER DAUMEN FEHLT | | | |
| VORGELEGT WURDE | STANDESAMT MEERSBURG | | | |
| | HEIRATSURKUNDE VOM 20. OKTOBER 1959 | | | |

— UF1

— F1

BUNDESREPUBLIK DEUTSCHLAND /FEDERAL REPUBLIC OF GERMANY

Typ/Type   Land/Country code   Karten-Nr/Card no.

PASSKARTE
PASSPORT CARD

— F2

Name/Surname

Vornamen/Given names

Nationalität/Nationality

Geburtstag/Date of birth

Geschlecht/Sex   Geburtsort/Place of birth

Ausstellungsdatum/Date of issue   Gültigkeitsdauer/ Date of expiry

Unterschrift/Authority   Unterschrift des Inhabers/ Holder's signature

LB

UF2